# EUROPEAN PATENT SPECIFICATION

(11) **EP 4 040 035 B1**
(45) Date of publication and mention of the grant of the patent: **31.01.2024**
(21) Application number: 21216719.1
(22) Date of filing: 22.12.2021
(51) Int. Cl.: F17C 1/04, F17C 1/16

(54) **HYDROGEN STORAGE TANK WITH LEAK MANAGEMENT FUNCTIONALITY**
WASSERSTOFFSPEICHERTANK MIT LECKVERWALTUNGSFUNKTIONALITÄT
RÉSERVOIR DE STOCKAGE D'HYDROGÈNE DOTÉ D'UNE FONCTION DE GESTION DE FUITE

(30) Priority: 19.01.2021 GB 202100662
(43) Date of publication of application: 10.08.2022
(73) Proprietor: Rolls-Royce plc, London N1 9FX (GB)
(72) Inventor: Butler, Philip, Derby, DE24 8BJ (GB); Dean, Eric, Derby, DE24 8BJ (GB); Palmer, Chloe, Derby, DE24 8BJ (GB)
(74) Representative: Rolls-Royce plc

(56) References cited:
- JP-A- 2011 144 860
- JP-A- 2018 155 336
- KR-B1- 101 917 185
- US-A1- 2013 341 235
- US-A1- 2014 008 373
- US-A1- 2017 307 139
- US-A1- 2019 195 429
- US-A1- 2020 132 252
- US-A1- 2020 408 360
- US-B2- 9 046 220

## Description

### TECHNICAL FIELD

The invention relates to storage of gaseous hydrogen, particularly for use in transport applications, including aeronautical applications.

### BACKGROUND

The use of gaseous hydrogen as a fuel is of increasing interest in transport applications, including aeronautical applications, due an absence of CO₂ generation at the point of use. However, storage of gaseous hydrogen in a storage tank presents several technical challenges, one of which is the management of hydrogen which leaks from the tank. Leakage of gaseous hydrogen from hydrogen storage tanks is common, due to the very small size of the hydrogen molecule (120pm). Loss of hydrogen by leakage wastes fuel, presents an explosion risk, particularly where a tank is located in an enclosed area, and may also lead to degradation of metallic parts by embrittlement. In a known type of tank, the external surface of a composite wall of a tank is provided with a layer which is porous to gas intended to be stored in the tank, and the external surface of the non-porous layer is provided with a non-porous layer. Gas which leaks through the composite tank wall collects in the porous layer and may be recovered. Examples of such tanks are disclosed in US Patent Application Publications 2013/0341235 A1 and 2019/0195429 A1. In order to assess the structural integrity of a tank, an indication of the history of impacts to the tank is useful.

### BRIEF SUMMARY

A first aspect of the present invention provides a hydrogen storage tank having a composite laminate wall, a hydrogen-porous layer in contact with the outer surface of the composite laminate wall and a hydrogen-non-porous layer in contact with the outer surface of the hydrogen-porous layer, the hydrogen-non-porous layer having an output port for venting hydrogen which passes through the composite laminate wall and the hydrogen-porous layer from the interior of the tank, characterised in that the hydrogen-porous layer is permanently mechanically deformable and in that the hydrogen-non-porous layer is separable from the hydrogen-porous layer and replaceable. A tank of the invention allows gaseous hydrogen which leaks from the tank to be collected, thus avoiding potential explosion and/or embrittlement of metal parts. The collected hydrogen may be used, for example in a fuel cell or gas turbine engine, rather than simply being wasted. The hydrogen-non-porous layer is non-porous to hydrogen which leaks through the composite laminate wall of the tank. A history of impacts experienced by the tank in use is recorded over time by the hydrogen-porous layer, providing an indication of the likely current structural condition of the tank. The hydrogen-porous layer may be examined by removing the hydrogen-non-porous layer.

The hydrogen-porous layer may comprise open-cell foam or may consist of an open-cell foam layer. Alternatively, the hydrogen-porous layer may be a layer of fibrous material.

The hydrogen-non-porous layer may be layer of rubber-based or polymeric material or alternatively a closed-cell foam layer.

The tank may be generally cylindrical and may comprise a plurality of impact-protecting ribs on the exterior of the tank, the ribs extending azimuthally and/or longitudinally with respect to the central longitudinal axis of the tank. The ribs may be integral with the hydrogen-non-porous layer, or applied to it. The ribs provide the tank with impact protection.

A second aspect of the invention provides apparatus comprising a hydrogen storage tank according to the first aspect of the invention and a measuring system for measuring the flow rate of hydrogen passing through the output port of the hydrogen storage tank. The flow rate and/or its rate of change may be used to infer the structural condition of the tank.

A third aspect of the invention provides apparatus comprising a hydrogen storage tank according to the first aspect of the invention, a hydrogen-fuelled fuel cell or a hydrogen-fuelled gas turbine engine and a conveying system arranged to convey hydrogen from the output port of the tank to the fuel cell or gas turbine engine. The apparatus provides for hydrogen which leaks from the hydrogen storage tank to be used in the fuel cell or gas turbine engine rather than simply wasted. A measuring system may be provided for measuring the flow rate of hydrogen within the conveying system. The apparatus may comprise a compressor arranged to increase the pressure of hydrogen within the conveying system prior to its delivery to the fuel cell or gas turbine engine.

A fourth aspect of the invention provides an aircraft comprising apparatus according to the third aspect.

### BRIEF DESCRIPTION OF THE DRAWINGS

Embodiments of the invention are described below by way of example only and with reference to the accompanying drawings in which:
- Figure 1: is a side view of a first example tank of the invention;
- Figure 2: is longitudinal cross-section through a portion of the wall of the Figure 1 tank in a plane which includes the central longitudinal axis of the tank; and
- Figure 3: is a longitudinal cross-section through a portion of the wall of a second example tank of the invention in a plane which includes the central longitudinal axis of the tank.

### DETAILED DESCRIPTION

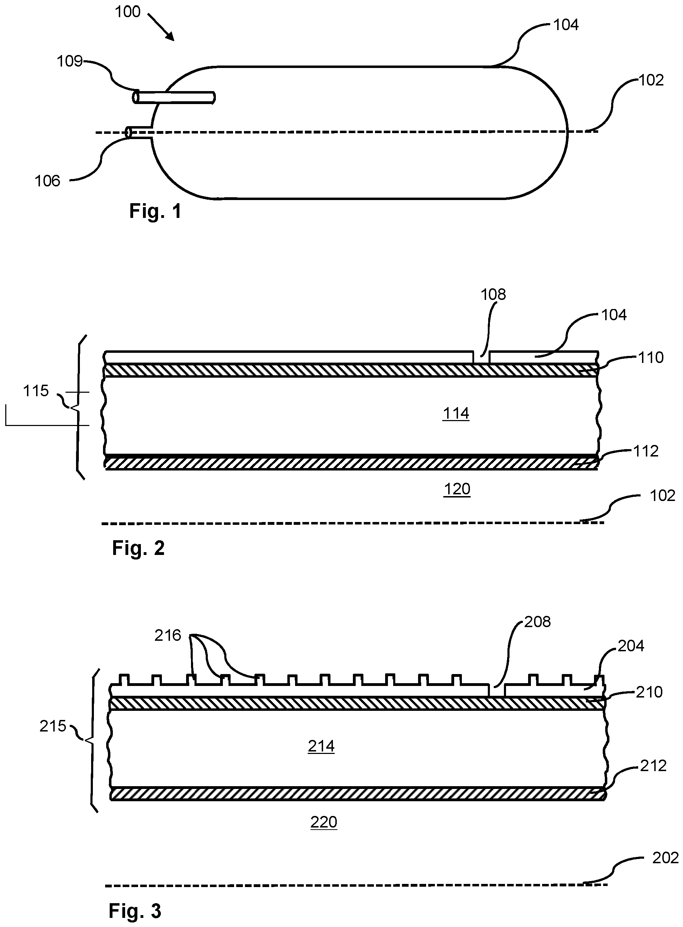

Referring to Figures 1 and 2, a first example hydrogen storage tank 100 of the invention has a generally cylindrical body with hemispherical domed ends, one domed end having main fuel port 106 allowing an internal storage volume 120 of the tank 100 to be filled with gaseous hydrogen and discharged. The tank 100 has a central longitudinal axis 102. The wall 115 of the tank 100 comprises a polymer liner 112, a composite laminate wall 114, a hydrogen-porous layer 110 in contact with the outer surface of the composite laminate wall 114 and a hydrogen-non-porous layer 104 in contact with the outer surface of the hydrogen-porous layer 110. The hydrogen-non-porous layer 104 allows hydrogen which leaks from the internal storage volume 120 through the liner 112, composite laminate wall 114 and hydrogen-porous layer 110 to be captured and removed via an output port 108 in the hydrogen-non-porous layer 104. A conduit 109 couples to the output port 108 to the exterior of the tank 100.

The conduit 109 may be connected by a conveying system to a second hydrogen storage tank for collection of hydrogen which has leaked from storage volume 120 of the tank 100. Alternatively, the conveying system may transfer hydrogen which has leaked from the tank 100 to a PEM fuel cell or a hydrogen-burning gas turbine engine. The conveying system may include a flow meter for measuring the rate at which hydrogen leaks from the tank 100. Where the conveying means is arranged to transport hydrogen from the conduit 109 to a fuel-cell or gas turbine engine, a compressor may be used increase the pressure of the hydrogen prior to its input to the fuel-cell or gas turbine engine. Measurements over time of the flow rate of hydrogen leaking from the internal storage volume 120 of the tank 100 through the output port 108 may be used to detect degradation of the composite laminate wall 114, for example by micro-cracking or de-lamination. A high rate of leakage compared to the rate of leakage when the tank 100 is first brought into service, or a sudden increase in the rate of leakage, may indicate imminent failure of the tank 100, allowing for its timely replacement.

The hydrogen storage tank 100 is a so-called 'Type IV' tank due to the presence of the polymer liner 112, however in a variant tank the liner 112 may be omitted so that the variant tank is a so-called `Type V' tank.

The hydrogen-porous layer 110 may be an open-cell foam layer or may comprise open-cell foam. Alternatively, the hydrogen-porous layer 110 may be a layer of fibrous material. The layer 104 is permanently mechanically deformable, allowing impacts experienced by the tank 100 to be recorded. The mechanical integrity of the tank 100 may be inferred at least in part from a history of impacts experienced by the tank 100.

The hydrogen-non-porous layer 104 may be a flexible rubber-based or polymeric layer, since the layer 104 is only required to contain leaked hydrogen at approximately atmospheric pressure rather than at the pressure within the internal storage volume 120 of the tank 100. The hydrogen-non-porous layer 104 may alternatively be a layer of closed-cell foam material.

The hydrogen-non-porous layer 104 is separable from the hydrogen-porous layer 110 and replaceable since it is the outer layer of the tank 100. The layer 104 can be tested to ensure its gas-tightness by applying a small positive pressure to the port 108 and monitoring its decay over time.

Figure 3 shows a longitudinal cross-section through a portion of the wall 215 of a second generally cylindrical example hydrogen storage tank of the invention, the cross-section including the central longitudinal axis 202 of the tank. The wall 215 of the second example tank has a structure similar to that of the wall 115 of the tank 100 of Figures 1 and 2; parts in Figure 3 which correspond to parts in Figure 2 are labelled with reference numerals differing by 100 from those labelling the corresponding parts in Figure 2. The hydrogen-non-porous layer 204 has a plurality of ribs 216 each of which extends azimuthally with respect to the central longitudinal axis 202 of the tank. The ribs 216 provide impact protection for parts of the wall 215 disposed radially inwardly of the layer 204. In a variant of the second example tank, a series of longitudinal ribs, each extending parallel to the central longitudinal axis 202 of the tank, are formed integrally with the layer 204 and distributed in azimuth around the periphery of the tank.

In other variants of the second example tank, azimuthal and/or longitudinal ribs may be applied to the outer surface of the hydrogen-non-porous layer rather than being formed integrally with it.

## Claims

1. A hydrogen storage tank (100) having a composite laminate wall (114; 214), a hydrogen-porous layer (110; 210) in contact with the outer surface of the composite laminate wall and a hydrogen-non-porous layer (104; 204) in contact with the outer surface of the hydrogen-porous layer, the hydrogen-non-porous layer having an output port (108; 208) for venting hydrogen which passes through the composite laminate wall and the hydrogen-porous layer from the interior of the tank, **characterised in that** the hydrogen-porous layer is permanently mechanically deformable and **in that** the hydrogen-non-porous layer is separable from the hydrogen-porous layer and replaceable.

2. A hydrogen storage tank according to claim 1 wherein the hydrogen-porous layer comprises open-cell foam or consists of an open-cell foam layer.

3. A hydrogen storage tank according to claim 1 wherein the hydrogen-porous layer is a layer of fibrous material.

4. A hydrogen storage tank according to any preceding claim wherein the hydrogen-non-porous layer is a rubber-based or polymeric layer.

5. A hydrogen storage tank according to any of claims 1 to 3 wherein the hydrogen-non-porous layer is a closed-cell foam layer.

6. A hydrogen storage tank according to any preceding claim, the tank being generally cylindrical and comprising a plurality of impact-protecting ribs (216) on the exterior of the tank, the ribs extending azimuthally and/or longitudinally with respect to the central longitudinal axis (202) of the tank.

7. A hydrogen storage tank according to claim 6 wherein the ribs are integral with the hydrogen-non-porous layer (204).

8. A hydrogen storage tank according to claim 6 wherein the ribs are applied to the exterior of the tank.

9. Apparatus comprising a hydrogen storage tank according to any preceding claim and a measuring system for measuring the flow rate of hydrogen passing through the output port of the hydrogen storage tank.

10. Apparatus comprising a hydrogen storage tank according to any of claims 1 to 8, a hydrogen-fuelled fuel cell or a hydrogen-fuelled gas turbine engine and a conveying system arranged to convey hydrogen from the output port of the tank to the fuel cell or gas turbine engine.

11. Apparatus according to claim 10 comprising means for measuring the flow rate of hydrogen within the conveying system.

12. Apparatus according to claim 10 or claim 11 further comprising a compressor arranged to compress hydrogen within the conveying system prior to delivery of the hydrogen to the fuel cell or gas turbine engine.

13. An aircraft comprising a hydrogen storage tank according to any of claims 1 to 8 or apparatus according to any of claims 9 to 12.

## Patentansprüche

1. Wasserstoffspeicherbehälter (100), der eine Verbundlaminatwand (114; 214), eine wasserstoffdurchlässige Schicht (110; 210) in Kontakt mit der Außenfläche der Verbundlaminatwand und eine wasserstoffundurchlässige Schicht (104; 204) in Kontakt mit der Außenfläche der wasserstoffdurchlässigen Schicht, aufweist, wobei die wasserstoffundurchlässige Schicht eine Ausgangsöffnung (108; 208) zum Entlüften von Wasserstoff aufweist, der aus dem Inneren des Behälters durch die Verbundlaminatwand und die wasserstoffdurchlässige Schicht dringt, **dadurch gekennzeichnet, dass** die wasserstoffdurchlässige Schicht permanent mechanisch verformbar ist und dass die wasserstoffundurchlässige Schicht von der wasserstoffdurchlässigen Schicht trennbar und ersetzbar ist.

2. Wasserstoffspeicherbehälter nach Anspruch 1, wobei die wasserstoffdurchlässige Schicht offenzelligen Schaumstoff umfasst oder aus einer offenzelligen Schaumstoffschicht besteht.

3. Wasserstoffspeicherbehälter nach Anspruch 1, wobei die wasserstoffdurchlässige Schicht eine Schicht aus faserigem Material ist.

4. Wasserstoffspeicherbehälter nach einem vorherigen Anspruch, wobei die wasserstoffundurchlässige Schicht eine Schicht auf Kautschukbasis oder aus einem Polymer ist.

5. Wasserstoffspeicherbehälter nach einem der Ansprüche 1 bis 3, wobei die wasserstoffundurchlässige Schicht eine geschlossenzellige Schaumstoffschicht ist.

6. Wasserstoffspeicherbehälter nach einem vorherigen Anspruch, wobei der Behälter generell zylindrisch ist und an der Außenseite des Behälters eine Vielzahl von Aufprallschutzrippen (216) umfasst, wobei sich die Rippen azimutal und/oder in Längsrichtung in Bezug auf die mittlere Längsachse (202) des Behälters erstrecken.

7. Wasserstoffspeicherbehälter nach Anspruch 6, wobei die Rippen einstückig mit der wasserstoffundurchlässigen Schicht (204) sind.

8. Wasserstoffspeicherbehälter nach Anspruch 6, wobei die Rippen an der Außenseite des Behälters angebracht sind.

9. Vorrichtung, umfassend einen Wasserstoffspeicherbehälter nach einem vorherigen Anspruch und ein Messsystem zum Messen der Wasserstoffdurchflussmenge, die durch die Ausgangsöffnung des Wasserstoffspeicherbehälters dringt.

10. Vorrichtung, umfassend einen Wasserstoffspeicherbehälter nach einem der Ansprüche 1 bis 8, eine wasserstoffbetriebene Brennstoffzelle oder ein wasserstoffbetriebenes Gasturbinentriebwerk und ein Fördersystem, das angeordnet ist, um Wasserstoff von der Ausgangsöffnung des Behälters zu der Brennstoffzelle oder dem Gasturbinentriebwerk zu fördern.

11. Vorrichtung nach Anspruch 10, umfassend Einrichtungen zum Messen der Wasserstoffdurchflussmenge in dem Fördersystem.

12. Vorrichtung nach Anspruch 10 oder 11, ferner umfassend einen Kompressor, der angeordnet ist, um Wasserstoff innerhalb des Fördersystems vor Zuführen des Wasserstoffs zu der Brennstoffzelle oder zu dem Gasturbinentriebwerk zu verdichten.

13. Luftfahrzeug, umfassend einen Wasserstoffspeicherbehälter nach einem der Ansprüche 1 bis 8 oder eine Vorrichtung nach einem der Ansprüche 9 bis 12.

## Revendications

1. Réservoir de stockage d'hydrogène (100) comportant une paroi en stratifié composite (114; 214), une couche poreuse à l'hydrogène (110; 210) en contact avec la surface extérieure de la paroi en stratifié composite, et une couche non poreuse à l'hydrogène (104; 204) en contact avec la surface extérieure de la couche poreuse à l'hydrogène, la couche non poreuse à l'hydrogène comportant un orifice de sortie (108; 208) pour libérer l'hydrogène qui traverse la paroi de stratifié composite et la couche poreuse à l'hydrogène depuis l'intérieur du réservoir, **caractérisé en ce que** la couche poreuse à l'hydrogène est déformable mécaniquement de façon permanente et **en ce que** la couche non poreuse à l'hydrogène est séparable de la couche poreuse à l'hydrogène et remplaçable.

2. Réservoir de stockage d'hydrogène selon la revendication 1, où la couche poreuse à l'hydrogène comprend une mousse en alvéoles ouvertes ou est constituée d'une couche de mousse en alvéoles ouvertes.

3. Réservoir de stockage d'hydrogène selon la revendication 1, où la couche poreuse à l'hydrogène est une couche de matériau fibreux.

4. Réservoir de stockage d'hydrogène selon l'une quelconque des revendications précédentes, où la couche non poreuse à l'hydrogène est une couche à base de caoutchouc ou polymérique.

5. Réservoir de stockage d'hydrogène selon l'une quelconque des revendications 1 à 3, où la couche non poreuse à l'hydrogène est une couche de mousse en alvéoles fermées.

6. Réservoir de stockage d'hydrogène selon l'une quelconque des revendications précédentes, le réservoir étant de forme générale cylindrique et comprenant une pluralité de nervures de protection conte les chocs (216) sur l'extérieur du réservoir, les nervures s'étendant de manière azimutale et/ou longitudinale par rapport à l'axe longitudinal central (202) du réservoir.

7. Réservoir de stockage d'hydrogène selon la revendication 6, où les nervures font partie intégrante de la couche non poreuse à l'hydrogène (204).

8. Réservoir de stockage d'hydrogène selon la revendication 6, où les nervures sont appliquées à l'extérieur du réservoir.

9. Appareil comprenant un réservoir de stockage d'hydrogène selon l'une quelconque des revendications précédentes et un système de mesure pour mesurer le débit de l'hydrogène qui passe par l'orifice de sortie du réservoir de stockage d'hydrogène.

10. Appareil comprenant un réservoir de stockage d'hydrogène selon l'une quelconque des revendications 1 à 8, une pile à combustible alimentée en hydrogène ou un moteur à turbine à gaz alimenté en hydrogène et un système de transport agencé pour transporter l'hydrogène de l'orifice de sortie du réservoir à la pile à combustible ou au moteur à turbine à gaz.

11. Appareil selon la revendication 10, comprenant un moyen pour mesurer le débit d'hydrogène dans le système de transport.

12. Appareil selon la revendication 10 ou la revendication 11, comprenant en outre un compresseur agencé pour comprimer l'hydrogène dans le système de transport avant la fourniture de l'hydrogène à la pile à combustible ou au moteur à turbine à gaz.

13. Aéronef comprenant un réservoir de stockage d'hydrogène selon l'une quelconque des revendications 1 à 8 ou appareil selon l'une quelconque des revendications 9 à 12.
